# EUROPÄISCHE PATENTSCHRIFT

(11) **EP 2 551 976 B1**
(45) Veröffentlichungstag und Bekanntmachung des Hinweises auf die Patenterteilung: **11.09.2019**
(21) Anmeldenummer: 12004469.8
(22) Anmeldetag: 13.06.2012
(51) Int. Cl.: H02G 3/10, H04M 1/02

(54) **Verriegelungssystem einer Station, insbesondere Türstation, eines Haus-Kommunikationssystems**
Locking system of a station, in particular door station, for a building communication system
Système de verrouillage d'une station, notamment d'une station de porte, d'un système de communication domestique

(30) Priorität: 27.07.2011 DE 102011108926
(43) Veröffentlichungstag der Anmeldung: 30.01.2013
(73) Patentinhaber: ABB Schweiz AG, 5400 Baden (CH)
(72) Erfinder: Wiese, Michael, 42897 Remscheid (DE); Schrage, Ortwin, 47906 Kempen (DE); Lerke, Richard, 58135 Hagen (DE); Lisson, Werner, 58093 Hagen (DE)

(56) Entgegenhaltungen:
- EP-A2- 1 843 558
- WO-A1-2005/029830
- WO-A1-2008/081321

## Beschreibung

Die Erfindung betrifft ein Verriegelungssystem einer Station, insbesondere Türstation, eines Haus-Kommunikationssystems.

Aus der WO 2008081321 A1 ist eine Trägerplatte für Video- Türsprechstellen mit verborgener Anbringung bekannt, die mindestens einen in die Wand eingelassenen oder auf mindestens eine Grundfläche montierten Rahmen und mindestens eine geformte Strangpressprofilschiene umfasst. In der Strangpressprofilschiene sind eine Reihe von Funktionsmodulen (21) der Video-Türsprechanlage untergebracht.

Aus der EP 1 843 558 A2 ist ein Verschlussmechanismus für ein Gehäuse (Sprechstation) einer Hauskommunikationsanlage bekannt, bestehend aus einem ortsfest zu installierenden, dosenartigen Aufnahmegehäuse und einem in das Aufnahmegehäuse einzusetzenden und über Haltemittel lösbar zu befestigenden Geräteeinsatz mit einer vorderen Deckplatte. Die Haltemittel sind als formschlüssig fügbare Rastverbindungen ausgebildet, die in einer zu der Deckplatte im Wesentlichen senkrechten Richtung gesehen derart verstellbar und in unterschiedlichen Einstellpositionen fixierbar sind, dass der Geräteeinsatz mit der Deckplatte bezüglich seiner eingesetzten und befestigten Einbaustellung relativ zu dem Aufnahmegehäuse in der zu der Deckplatte im Wesentlichen senkrechten Richtung ausrichtbar ist. Für ein autorisiertes Lösen ist vorgesehen, dass mindestens eine der Rastverbindungen ein zum Verriegeln / Entriegeln mittels eines speziellen Werkzeuges zwischen einer Verriegelungsstellung und einer Lösestellung bewegbares Riegelteil aufweist, so dass ein Lösen nicht ohne das spezielle Werkzeug möglich ist.

Aus der DE 20 2008 012 876 U1 ist eine Türstation mit einem eine Gehäuseöffnung aufweisenden Gehäuse und mit einer die Gehäuseöffnung abdeckenden Haupt-Frontplatte sowie mit einer in einer Verriegelungsstellung die Haupt-Frontplatte an dem Gehäuse verriegelnden Verriegelungsvorrichtung bekannt. Die Verriegelungsvorrichtung ist mittels eines durch eine Öffnung in der Haupt-Frontplatte eingeführten Werkzeugs in eine die Haupt-Frontplatte freigebende Freigabestellung überführbar. Die Verriegelungsvorrichtung umfasst mindestens einen starren Haltevorsprung, eine zur Einführung des Werkzeugs querbeweglich geführten Schieber, der den Haltevorsprung in der Verriegelungsstellung hintergreift und in der Freigabestellung freigibt, und eine mit dem eingeführten Werkzeug zusammenwirkende Umlenkeinrichtung, die die Einführbewegung des Werkzeugs in eine Querbewegung des Schiebers bis hin zur Freigabe umlenkt.

Die Erfindung wird durch den Gegenstand der unabhängigen Ansprüche, bevorzugte Ausführungsformen sind in den abhängigen Ansprüchen definiert. Die Ausführungsformen und/oder Beispiele der folgenden Beschreibung, die nicht durch die beigefügten Ansprüche abgedeckt sind, gelten als nicht Teil der vorliegenden Erfindung.

Der Erfindung liegt die Aufgabe zu Grunde, ein optimiertes Verriegelungssystem einer Station, insbesondere Türstation, eines Haus-Kommunikationssystems anzugeben.

Diese Aufgabe wird erfindungsgemäß gelöst durch ein Verriegelungssystem einer Station, insbesondere Türstation, eines Haus-Kommunikationssystems,
- wobei die Station eine in eine Haupt-Frontplatte und eine Abschluss-Frontplatte unterteilte Frontplatte aufweist und ein Spalt zwischen Haupt-Frontplatte und Abschluss-Frontplatte ausgebildet ist,
- wobei die Haupt-Frontplatte mit einem Geräteeinsatz und einem Schließmodul in fester Verbindung steht,
- wobei die Abschluss-Frontplatte mit einer ein Verschlussteil aufweisenden Abschlussleiste in fester Verbindung steht,
- wobei zur lösbaren Befestigung der Abschlussleiste an der Station eine Hinterhakung in Eingriff ist, bei welcher Rasthaken des Verschlussteils der Abschlussleiste über Rastkanten von Einführschrägen des Schließmoduls greifen und
- wobei zur Demontage der Abschlussleiste von der Station ein Demontagewerkzeug in den Spalt greift, mit welchem die Abschlussleiste längs des Spaltes transversal derart verschiebbar ist, dass sich die Hinterhakung löst.

In weiterer Ausgestaltung der Erfindung greift dabei zur Blockierung der seitlichen Verschiebung der Abschlussleiste relativ zum Schließmodul ein mit dem Schließmodul in Verbindung stehender Nocken in eine Nut einer Verriegelungsleiste an der der Haupt-Frontplatte zugewandten Stirnseite der Abschluss-Frontplatte ein. Vorteilhaft kann es sich dabei um den Nocken eines Beschriftungsträgers für ein Tastenmodul der Station handeln.

Um ein Aufbiegen der Hinterhakung mit nachfolgendem Lösen des Rasthakens von der Rastkante sicher zu verhindern, ist die Hinterhakung mittels eines federbelasteten Schiebers des Schließmoduls zweckmäßig zusätzlich verriegelt. Das Lösen dieser Verriegelung erfolgt gleichzeitig mit dem Querverschieben von Demontagewerkzeug und Abschlussleiste.

Vorteilhaft greifen Seitenarme des Schließmoduls in Taschen der Abschlussleiste ein, wodurch das Schließmodul an die Abschlussleiste gezogen wird.

Die mit der Erfindung erzielbaren Vorteile bestehen insbesondere darin, dass ein Öffnen der Station ohne das zugehörige, speziell ausgebildete Demontagewerkzeug nicht möglich ist. Dabei ist die Handhabung des Demontagewerkzeuges sehr einfach von der Frontseite der Station her möglich. Für die Montage der Station ist kein Werkzeug erforderlich, es genügt das Aufsetzen und Andrücken der Abschlussleiste auf die Station. Die Verriegelung ergibt sich quasi automatisch ohne weitere Handgriffe.

Die Erfindung wird nachstehend an Hand der in der Zeichnung dargestellten Ausführungsbeispiele erläutert. Es zeigen:
- Fig. 1: Einzelschritte bei der Montage und Demontage einer Abschlussleiste,
- Fig. 2: den modularen Aufbau eines Geräteeinsatzes,
- Fig. 3: ein Schließmodul und eine Abschlussleiste inklusive Verschlussteil bei demontierter Position,
- Fig. 4: das Schließmodul und die Abschlussleiste bei montierter Position,
- Fig. 5: die einzelnen Bauteile des Schließmoduls,
- Fig. 6: den ersten Schritt zur Demontage der Abschlussleiste: das Aufsetzen eines Demontagewerkzeuges,
- Fig. 7: den zweiten Schritt zur Demontage der Abschlussleiste: das Querverschieben des Demontagewerkzeuges inklusive Abschlussleiste,
- Fig. 8: den dritten Schritt zur Demontage der Abschlussleiste: das Abziehen der Abschlussleiste,
- Fig. 9: eine Ansicht von unten auf das Schließmodul und die Abschlussleiste bei demontierter Position,
- Fig. 10: eine Ansicht von oben auf das Schließmodul und die Abschlussleiste inklusive Verschlussteil bei demontierter Position,
- Fig. 11: eine perspektivische Ansicht von unten auf das Schließmodul und die Abschlussleiste inklusive Verschlussteil bei demontierter Position,
- Fig. 12: eine Ansicht von hinten auf das Schließmodul und die Abschlussleiste inklusive Verschlussteil bei montierter Position,
- Fig. 13 - 15: Einzelschritte bei der Montage einer Abschlussleiste inklusive Verschlussteil im Querschnitt,
- Fig. 16: eine perspektivische Ansicht von hinten auf das Schließmodul und die Abschlussleiste inklusive Verschlussteil bei montierter Position,
- Fig. 17: ein Detail zur Anordnung gemäß Fig. 16,
- Fig. 18: den Beginn des zweiten Schrittes zur Demontage der Abschlussleiste im Querschnitt.

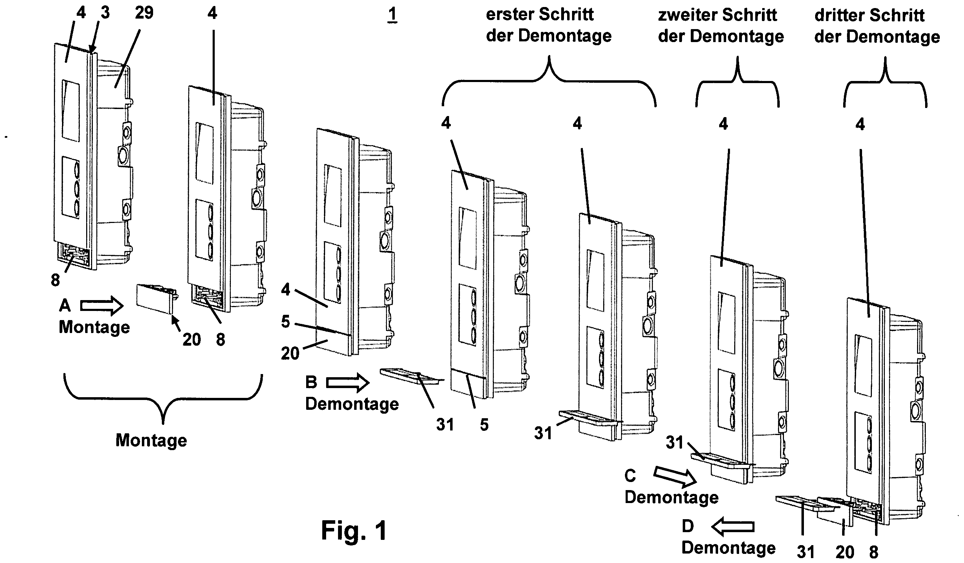

In Fig. 1 sind Einzelschritte bei der Montage und Demontage einer Abschlussleiste dargestellt. Die Figur 1 zeigt eine Station 1, insbesondere eine Türstation, eines Haus-Kommunikationssystems in sieben verschiedenen Bildern:
- Im ersten Bild von links ist ein in einer Unterputz-Dose 29 installierter Geräteeinsatz 3 dargestellt, dessen Haupt-Frontplatte 4 im unteren Endabschnitt der Unterputz-Dose 29 eine Aussparung 8 für die Aufnahme einer Abschlussleiste freilässt. Bei einer Aufputz-Ausführung der Station 1 wird ein Aufputz-Gehäuseunterteil an Stelle der Unterputz-Dose 29 verwendet.
- Im zweiten Bild von links ist ein Pfeil A gezeigt, welcher die Montagerichtung für eine Abschlussleiste 20 senkrecht zur Haupt-Frontplatte 4 hin beim Aufsetzen auf die Aussparung 8 der Station 1 bezeichnet.
- Im dritten Bild von links ist eine komplette Station 1 gezeigt, wobei zwischen Haupt-Frontplatte 4 und Abschluss-Frontplatte der Abschlussleiste 20 ein Spalt 5 in definierter Weise ausgebildet ist.
- Im vierten und fünften Bild von links ist ein erster Schritt zur Demontage der Abschlussleiste 20 gezeigt, das Aufsetzen eines Demontagewerkzeuges 31 auf den Spalt 5, wobei ein Pfeil B die Bewegungsrichtung des Demontagewerkzeuges 31 senkrecht zur Haupt-Frontplatte 4 hin bezeichnet.
- Im sechsten Bild von links ist ein zweiter Schritt zur Demontage der Abschlussleiste 20 gezeigt, das Querverschieben des Demontagewerkzeuges 31 inklusive der Abschlussleiste (20), wobei ein Pfeil C die Bewegungsrichtung des Demontagewerkzeuges 31 parallel zur Haupt-Frontplatte 4 und längs des Spaltes 5 bezeichnet.
- Im siebten Bild von links ist ein dritter Schritt zur Demontage der Abschlussleiste 20 gezeigt, das Abziehen des Demontagewerkzeuges 31 und der freigegebenen Abschlussleiste 20, wobei ein Pfeil D die Bewegungsrichtung des Demontagewerkzeuges 31 und der Abschlussleiste 20 senkrecht von der Haupt-Frontplatte 4 weg bezeichnet.

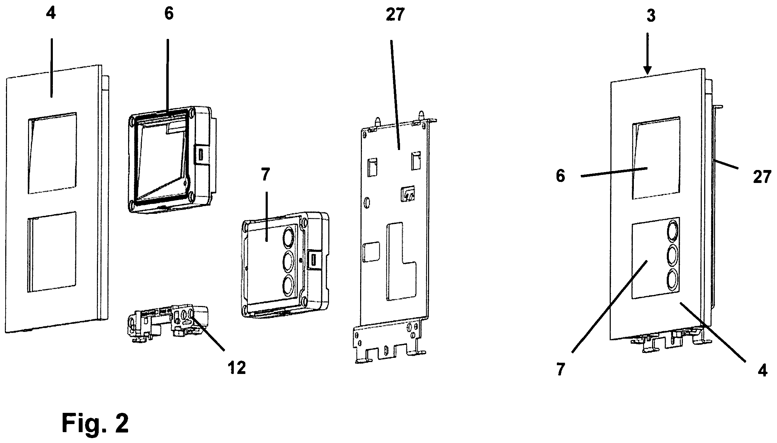

In Fig. 2 ist der modulare Aufbau eines Geräteeinsatzes dargestellt. Es ist ein vormontierter Geräteeinsatz 3 mit seinen Baukomponenten dargelegt. Dabei ist der modulare Aufbau des Geräteeinsatzes 3 gut zu erkennen - mit Haupt-Frontplatte 4, Montageplatte 27, Audiomodul 6 (mit Mikrofon, Lautsprecher und Verstärker) Tastenmodul 7 (mit Klingelknöpfen und Namensschildern) und Schließmodul 12. Die Fixierung der einzelnen Module 6, 7, 12 an der Montageplatte 27 erfolgt vorzugsweise durch Schraubverbindungen.

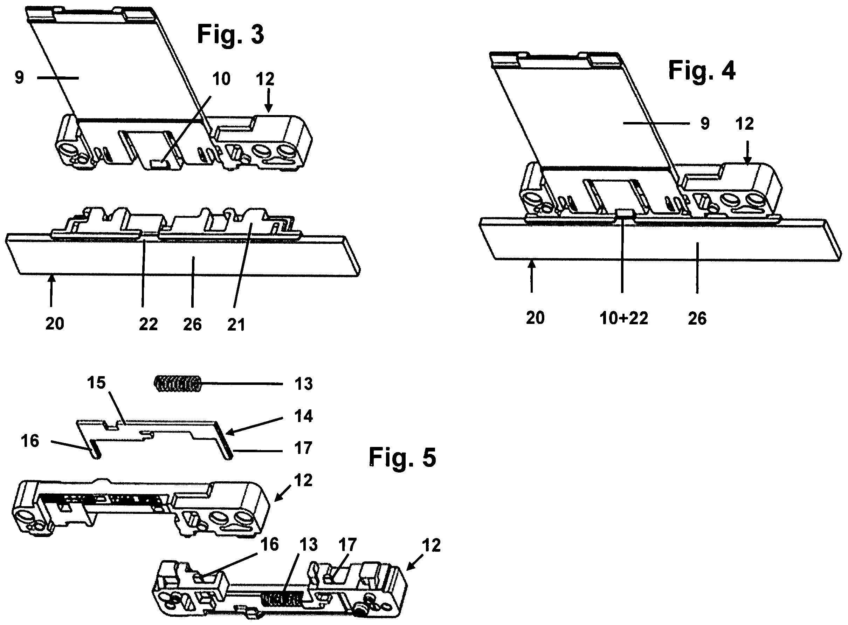

In Fig. 3 sind ein Schließmodul und eine Abschlussleiste inklusive Verschlussteil bei demontierter Position dargestellt. Dabei ist ein Beschriftungsträger 9 - welcher die (auswechselbaren) Beschriftungen zu den Namensschildern des Tastenmoduls 7 trägt - in das Schließmodul 12 (und selbstverständlich auch in das nicht dargestellte Tastenmodul 7) eingeschoben. Die Abschlussleiste 20 weist eine Verriegelungsleiste mit einer Nut 22 an der der Haupt-Frontplatte 4 zugewandten Stirnseite ihrer Abschluss-Frontplatte 26 auf. Bei montierter Abschlussleiste und eingeschobenem Beschriftungsträger 9 greift ein Nocken 10 des Beschriftungsträgers 9 in diese Nut 22, so dass ohne weitere Maßnahmen eine seitliche Verschiebung der Abschlussleiste 20 gegenüber dem Schließmodul 12 nicht möglich ist.

In Fig. 4 sind das Schließmodul und die Abschlussleiste bei montierter Position dargestellt, wobei insbesondere der Eingriff des Nockens 10 des Beschriftungsträgers 9 (eingeschoben in das Schließmodul 12 und das nicht dargestellte Tastenmodul 7) in die Nut 22 der Verriegelungsleiste der Abschluss-Frontplatte 26 der Abschlussleiste 20 deutlich zu erkennen ist.

In Fig. 5 sind die einzelnen Bauteile des Schließmoduls dargestellt. Im Hauptkörper des Schließmoduls 12 ist ein Schieber 14 beweglich gelagert. Dieser U-förmig ausgebildete Schieber 14 weist einen Schieber-Basisschenkel 15 mit beidseitig sich anschließenden Schieber-Seitenschenkeln 16, 17 auf. Eine Feder 13 drückt den Schieber 14 in eine stabile Ausgangsposition respektive Ruheposition.

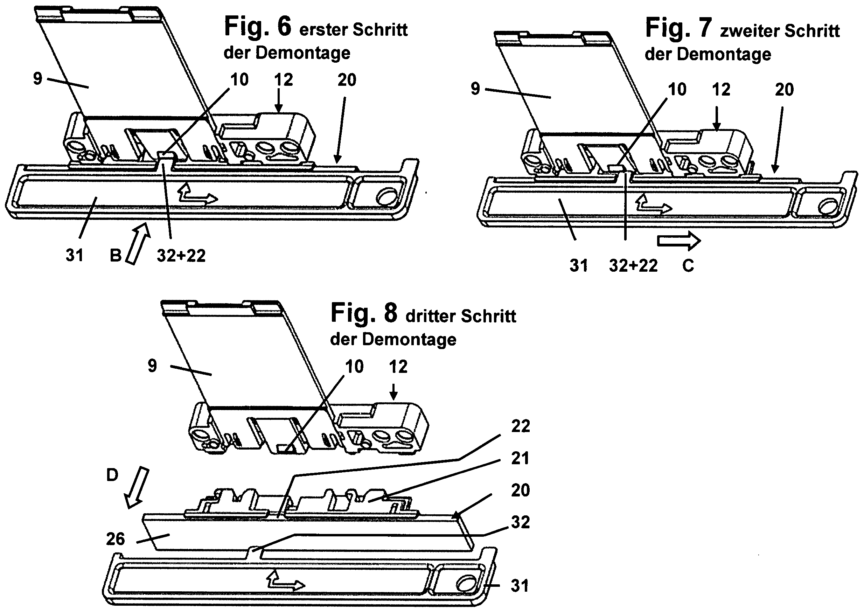

In Fig. 6 ist der erste Schritt zur Demontage der Abschlussleiste von der Station dargestellt, das Aufsetzen des Demontagewerkzeuges, siehe hierzu auch Figur 1 (viertes und fünftes Bild von links): Das Demontagewerkzeug 31 wird auf den Spalt 5 zwischen Haupt-Frontplatte 4 und Abschluss-Frontplatte 26 der Abschlussleiste 20 aufgesetzt, wobei der Pfeil B die Bewegungsrichtung des Demontagewerkzeuges 31 senkrecht zur Haupt-Frontplatte 4 hin bezeichnet. Das Demontagewerkzeug 31 weist einen Zapfen 32 auf, welcher durch die Nut 22 in der Verriegelungsleiste der Abschluss-Frontplatte 26 der Abschlussleiste 20 greift und somit gegen den Nocken 10 des Beschriftungsträgers 9 presst, so dass der Nocken 10 aus der Nut 22 herausgedrückt wird. Hierdurch wird die Blockierung des Querverschiebens zwischen Schließmodul 12 und Abschlussleiste 20 gelöst.

In Fig. 7 ist der zweite Schritt zur Demontage der Abschlussleiste von der Station dargestellt, das Querverschieben des Demontagewerkzeuges, siehe hierzu auch Figur 1 (sechstes Bild von links): Das Demontagewerkzeug 31 wird parallel zur Haupt-Frontplatte 4 und längs des Spaltes 5 quer verschoben, wobei ein Pfeil C diese Bewegungsrichtung des Demontagewerkzeuges 31 bezeichnet. Da der Zapfen 32 während dieser Bewegung nach wie vor in Eingriff mit der Nut 22 in der Verriegelungsleiste der Abschluss-Frontplatte 26 der Abschlussleiste 20 steht, wird die Abschlussleiste 20 gleichermaßen mit dem Demontagewerkzeug 31 relativ zum Schließmodul 12 (inklusive eingeschobenem Beschriftungsträger 9) quer verschoben.

In Fig. 8 ist der dritte Schritt zur Demontage der Abschlussleiste von der Station dargestellt, das Abziehen der Abschlussleiste, siehe hierzu auch Figur 1 (siebtes Bild von links): Sowohl das Demontagewerkzeug 31 als auch die freigegebene Abschlussleiste 20 werden abgezogen, wobei der Pfeil D die Bewegungsrichtung des Demontagewerkzeuges 31 und der Abschlussleiste 20 senkrecht von der Haupt-Frontplatte 4 und vom Schließmodul 12 weg bezeichnet.

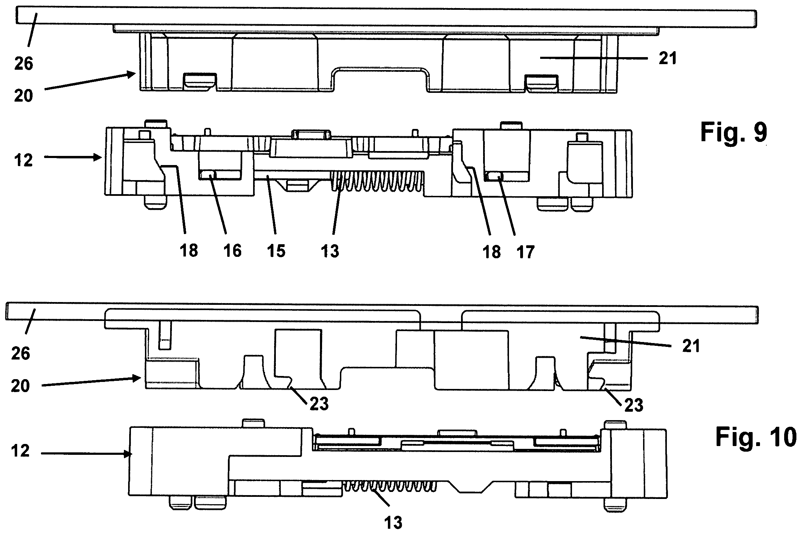

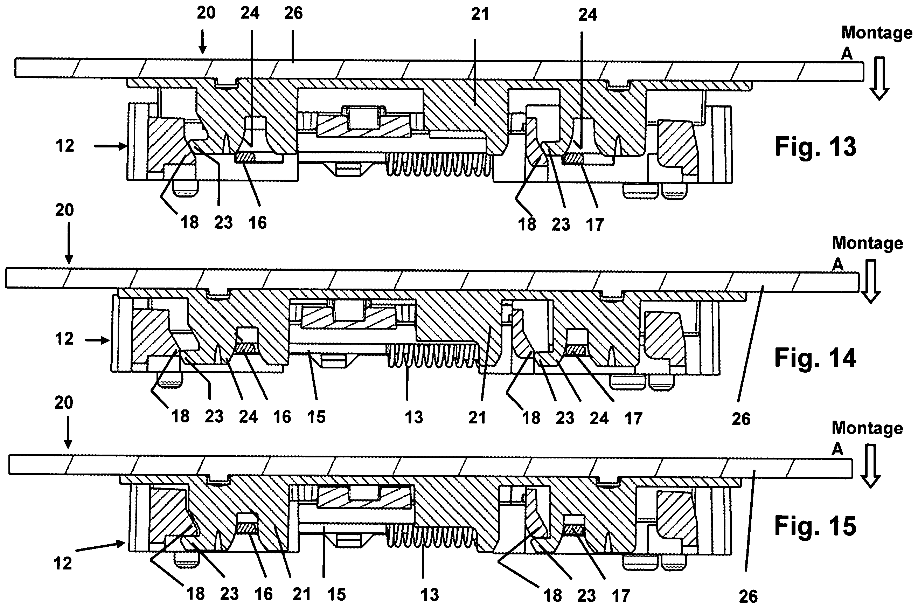

In Fig. 9 ist eine Ansicht von unten auf das Schließmodul und die Abschlussleiste bei demontierter Position dargestellt. Es sind der Schieber-Basisschenkel 15 sowie die beiden Schieber-Seitenschenkel 16, 17 des Schließmoduls 12 zu erkennen, wobei der Schieber 14 mittels der Feder 13 in die Ausgangsposition respektive Ruheposition gepresst ist. Des Weiteren sind zwei Einführschrägen 18 des Schließmoduls 12 gezeigt, welche korrespondierend zu in Fig. 10 gezeigten Rasthaken 23 der Abschlussleiste 20 ausgebildet sind, wobei zur Funktionsweise der Montage der Abschlussleiste 20 am Schließmodul 12 auf die nachfolgenden Figuren 13 - 15 hingewiesen wird. Die Abschlussleiste 20 besteht im Wesentlichen aus einem Verschlussteil 21 mit daran befestigter Abschluss-Frontplatte 26.

In Fig. 10 ist eine Ansicht von oben auf das Schließmodul und die Abschlussleiste bei demontierter Position dargestellt, wobei insbesondere die beiden unter Figur 9 bereits erwähnten Rasthaken 23 der Abschlussleiste 20 von Interesse sind. Beim Schließmodul 12 ist die den Schieber zurückstellende Feder 13 zu erkennen.

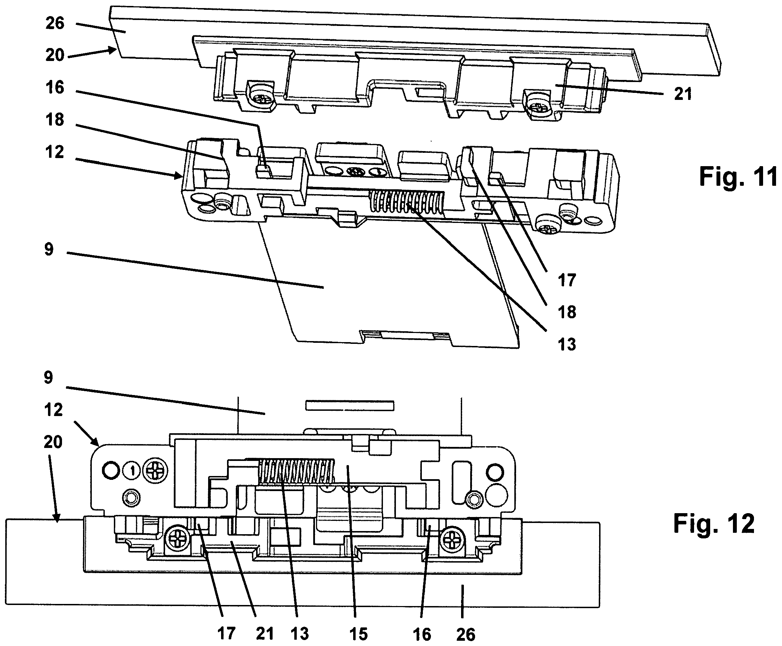

In Fig. 11 ist eine perspektivische Ansicht von unten auf das Schließmodul und die Abschlussleiste bei demontierter Position dargestellt. In das Schließmodul 12 (und das nicht dargestellte Tastenmodul 7) ist der Beschriftungsträger 9 eingeschoben. Die den Schieber 14 mit seinen beiden Schieber-Seitenschenkeln 16, 17 in die Ausgangsposition respektive Ruheposition zurückstellende Feder 13 und die Einführschrägen 18 sind gut zu erkennen. Des Weiteren sind Verschlussteil 21 und Abschluss-Frontplatte 26 der Abschlussleiste 20 gezeigt.

In Fig. 12 ist eine Ansicht von hinten auf das Schließmodul und die Abschlussleiste bei montierter Position dargestellt. Es sind der Schieber 14 mit Schieber-Basisschenkel 15, den beiden Schieber-Seitenschenkeln 16, 17 und die Feder 13 des Schließmoduls 12, die Abschlussleiste 20 mit Abschluss-Frontplatte 26 sowie der eingeschobene Beschriftungsträger 9 zu erkennen.

In Fig. 13 - 15 sind Einzelschritte bei der Montage einer Abschlussleiste im Querschnitt dargestellt, wobei der Pfeil A wiederum die Montagerichtung für die Abschlussleiste 20 senkrecht zur Haupt-Frontplatte 4 und zum Schließmodul 12 hin beim Aufsetzen auf die Station 1 bezeichnet:
- Fig. 13 zeigt die erste Phase des Montagevorganges, bei welcher Rasthaken 23 des Verschlussteils 21 der Abschlussleiste 20 an Einführschrägen 18 mit Rastkanten des Schließmoduls 12 entlang gleiten. Die Schieber-Seitenschenkel 16, 17 des Schiebers 14 treffen auf Einführtrichter 24 des Schließmoduls 12.
- Fig. 14 zeigt die zweite Phase des Montagevorganges mit fortgesetztem Gleiten der Rasthaken 23 längs der Einführschrägen 18 und der Schieber-Seitenschenkel 16, 17 entlang der Einführtrichter 24, wobei die Seitenschenkel 16, 17 gegen die Kraft der mit dem Schieber-Basisschenkel 15 in Eingriff stehenden Feder 13 seitlich in eine sogenannte Freigabestellung verschoben werden.
- Fig. 15 zeigt die Abschlussphase des Montagevorganges, bei welcher die Rasthaken 23 über die Rastkanten der Einführschrägen 18 greifen, so dass ohne weitere Maßnahmen eine Demontage der Abschlussleiste 20 vom Schließmodul nicht mehr möglich ist. Nachdem die Hinterhakungen "Rasthaken 23 greifen über die Rastkanten der Einführschrägen 18" verrastet sind, fährt der Schieber 14 - bedingt durch die Rückstellkraft der Feder 13 - wieder in seine Ausgangsposition und hält die Abschlussleiste 20 in dieser Stellung, welche nunmehr einer Verriegelungsstellung entspricht. Zusätzlich erfolgt ein Schutz vor Entriegeln durch den Beschriftungsträger 9, dessen Nocken 10 in die Nut 22 in der Verriegelungsleiste der Abschluss-Frontplatte 26 der Abschlussleiste 20 eingreift, wie in Figur 4 bereits gezeigt.

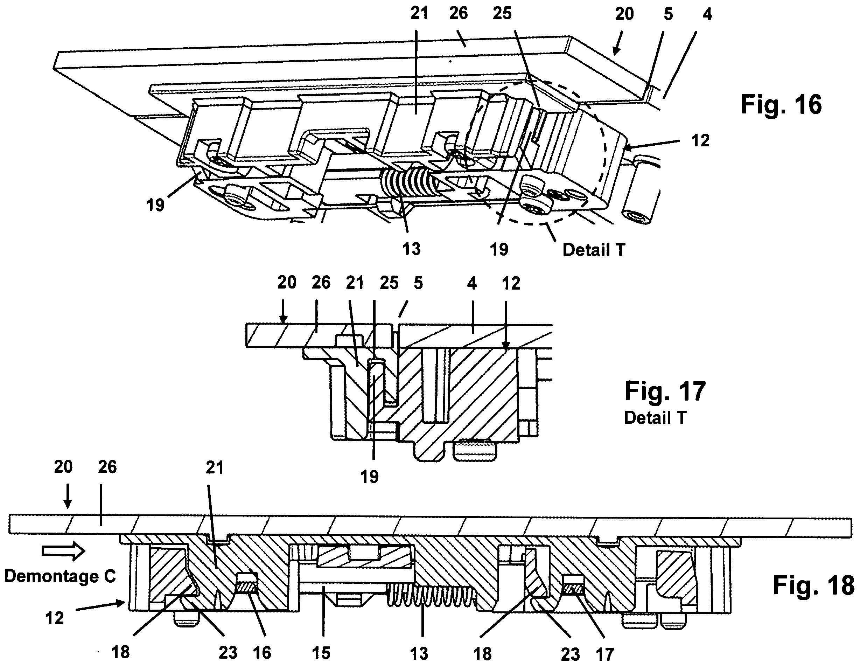

In Fig. 16 ist eine perspektivische Ansicht von hinten auf das Schließmodul und die Abschlussleiste bei montierter Position dargestellt. Haupt-Frontplatte 4 und Abschluss-Frontplatte 26 liegen plan (in einer einzigen Ebene respektive Fläche) unter Bildung des Spaltes 5 nebeneinander. Es ist zu erkennen, dass Seitenarme 19 des Schließmoduls 12 in Taschen 25 des Verschlussteils 21 der Abschlussleiste 20 eingreifen - siehe hierzu auch Detail T - , wodurch die Abschlussleiste 20 an das Schließmodul 12 gezogen wird.

In Fig. 17 ist ein Detail T zur Anordnung gemäß Fig. 16 dargestellt, bei welchem
- einerseits die plane Anordnung von Haupt-Frontplatte 4 und Abschluss-Frontplatte 26 nebeneinander unter Bildung des Spaltes 5 und
- anderseits der Eingriff des Seitenarms 19 des mit der Haupt-Frontplatte 4 in Verbindung stehenden Schließmoduls 12 in die Tasche 25 des Verschlussteils 21 der Abschlussleiste 20
zu erkennen sind.

In Fig. 18 ist der Beginn des zweiten Schrittes zur Demontage der Abschlussleiste im Querschnitt dargestellt: Ausgangsszenario ist das Ineinandergreifen von Schließmodul 12 und Verschlussteil 21 der Abschlussleiste 20 unmittelbar vor dem Querverschieben des Demontagewerkzeuges inklusive der Abschlussleiste. Es ist einfach zu erkennen, dass bei relativer Verschiebung der Abschlussleiste 20 nach rechts (parallel zur Haupt-Frontplatte 4 und längs des Spaltes 5 - siehe die mit Pfeil C gekennzeichnete Bewegungsrichtung) die Hinterhakungen "Rasthaken 23 greifen über die Rastkanten der Einführschrägen 18" gelöst wird. Gleichzeitig wird durch diese Querverschiebung der Schieber 14 aus seiner Verriegelungsstellung (Ausgangsposition respektive Ruheposition) in die Freigabestellung ausgelenkt, bei welcher im nachfolgenden (dritten) Schritt zur Demontage der Abschlussleiste das Abziehen der Abschlussleiste 20 senkrecht von der Haupt-Frontplatte 4 weg möglich ist - siehe Pfeil D in Fig. 1, welcher die Bewegungsrichtung des Demontagewerkzeuges 31 und der Abschlussleiste 20 nach erfolgter Demontage zeigt.

Bei nicht von der Abschlussleiste 20 abgedeckter Aussparung 8 der Station 1 werden die folgenden weiteren Maßnahmen ermöglicht:
- Der Geräteeinsatz 3 mit Haupt-Frontplatte 4 kann in seinem unteren Endabschnitt von der Unterputz-Dose 29 (oder dem Aufputz-Gehäuseunterteil) um eine definierte und begrenzte Wegstrecke nach vorne gezogen werden, wodurch es in einfacher Weise ermöglicht wird, einen Beschriftungsträger 9 aus dem Tastenmodul 7 und dem Schließmodul 12 zu ziehen oder einen neu beschrifteten Beschriftungsträger 9 wieder in das Tastenmodul 7 und das Schließmodul 12 einzuschieben.
- Der Geräteeinsatz 3 kann um einen Winkel von ungefähr 90° in eine Service-Position geschwenkt werden (die Drehachse wird vom unteren Endabschnitt des Geräteeinsatzes 3 gebildet), bei welcher ein einfacher Zugang zur Rückseite des Geräteeinsatzes 3 und insbesondere seiner Module gegeben ist, um derart beispielsweise Einstellungen vornehmen zu können. Auch eine Verdrahtung (Verbindung mit Anschlussleitungen) ist in dieser Service-Position in einfacher Weise möglich.
- Der Geräteeinsatz 3 kann vollständig demontiert werden, beispielsweise bei Defekt und einem nachfolgend erforderlichem Austausch des gesamten Geräteeinsatzes.

### Bezugszeichenliste

- 1: Station, insbesondere Türstation eines Haus-Kommunikationssystems
- 2: -
- 3: Geräteeinsatz, vormontiert
- 4: Haupt-Frontplatte des Geräteeinsatzes 3
- 5: Spalt zwischen Haupt-Frontplatte 4 und Abschluss-Frontplatte 26 der Abschlussleiste 20
- 6: Audiomodul mit Mikrofon, Lautsprecher, Verstärker
- 7: Tastenmodul mit Klingelknöpfen, Namensschildern
- 8: Aussparung (zur Aufnahme der Abschlussleiste 20)
- 9: Beschriftungsträger
- 10: Nocken des Beschriftungsträgers 9
- 11: -
- 12: Schließmodul
- 13: Feder
- 14: Schieber
- 15: Schieber-Basisschenkel
- 16: Schieber-Seitenschenkel
- 17: Schieber-Seitenschenkel
- 18: Einführschräge mit Rastkante für Rasthaken 23
- 19: Seitenarme
- 20: Abschlussleiste
- 21: Verschlussteil der Abschlussleiste 20
- 22: Nut einer Verriegelungsleiste an der der Haupt-Frontplatte 4 zugewandten Stirnseite der Abschluss-Frontplatte 26 der Abschlussleiste 20
- 23: Rasthaken des Verschlussteils 21 der Abschlussleiste 20
- 24: Einführtrichter für Schieber-Seitenschenkel 16, 17
- 25: Taschen
- 26: Abschluss-Frontplatte der Abschlussleiste 20
- 27: Montageplatte des Geräteeinsatzes 3
- 28: -
- 29: Unterputz-Dose oder Aufputz-Gehäuseunterteil
- 30: -
- 31: Demontagewerkzeug
- 32: Zapfen des Demontagewerkzeuges 31

## Patentansprüche

1. Verriegelungssystem einer Türstation (1) eines Haus-Kommunikationssystems,
• wobei die Station eine in eine Haupt-Frontplatte (4) und eine Abschluss-Frontplatte (26) unterteilte Frontplatte aufweist und ein Spalt (5) zwischen Haupt-Frontplatte (4) und Abschluss-Frontplatte (26) ausgebildet ist,
• wobei die Haupt-Frontplatte (4) mit einem Geräteeinsatz (3) und einem Schließmodul (12) in fester Verbindung steht,
• wobei die Abschluss-Frontplatte (26) mit einer ein Verschlussteil (21) aufweisenden Abschlussleiste (20) in fester Verbindung steht,
**dadurch gekennzeichnet, dass**
• zur lösbaren Befestigung der Abschlussleiste (20) an der Station (1) eine Hinterhakung vorgesehen ist, bei welcher Rasthaken (23) des Verschlussteils (21) der Abschlussleiste (20) über Rastkanten von Einführschrägen (18) des Schließmoduls (12) greifen,
• die Abschlussleiste (20) eine Verriegelungsleiste aufweist, wobei zur Blockierung der seitlichen Verschiebung der Abschlussleiste (20) relativ zum Schließmodul (12) ein mit dem Schließmodul (12) in Verbindung stehender Nocken (10) in eine Nut (22) einer Verriegelungsleiste an der der Haupt-Frontplatte (4) zugewandten Stirnseite der Abschluss-Frontplatte (26) eingreift, und
• zur Demontage der Abschlussleiste (20) von der Station (1) ein Demontagewerkzeug (31) in den Spalt (5) greift, das Demontagewerkzeug (31) einen Zapfen (32) aufweist, welcher durch die Nut (22) in der Verriegelungsleiste der Abschluss-Frontplatte (26) der Abschlussleiste (20) greift und gegen den Nocken (10) presst, zum Herausdrücken der Nocken (10) aus der Nut (22) und zum Lösen der Blockierung des Querverschiebens zwischen Schließmodul und Abschlussleiste (20).

2. Verriegelungssystem nach Anspruch 1, **dadurch gekennzeichnet, dass** die Hinterhakung mittels eines federbelasteten Schiebers (14) des Schließmoduls verriegelt ist.

3. Verriegelungssystem nach Anspruch 1, **dadurch gekennzeichnet, dass** Seitenarme (19) des Schließmoduls (12) in Taschen (25) der Abschlussleiste (20) eingreifen.

## Claims

1. Locking system of a door station (1) of a house communication system,
• wherein the station comprises a front plate, which is subdivided into a main front plate (4) and an end front plate (26) and a gap (5) is embodied between the main front plate (4) and the end front plate (26),
• wherein the main front plate (4) is fixedly connected to a device insert (3) and a closure module (12),
• wherein the end front plate (26) is fixedly connected to an end strip (20) that comprises a locking part (21),
**characterized in that**
• for the purpose of releasably fastening the end strip (20) to the station (1) a hooking arrangement is provided, in which latching hooks (23) of the locking part (21) of the end strip (20) engage over latching edges of insertion inclines (18) of the closure module (12),
• the end strip (20) comprises a locking strip, wherein for the purpose of blocking the lateral displacement of the end strip (20) relative to the closure module (12) a cam (10) that is connected to the closure module (12) engages in a groove (22) of a locking strip on the end face of the end front plate (26), which end face faces the main front plate (4), and
• for the purpose of removing the end strip (20) from the station (1) a removal tool (31) engages in the gap (5), the removal tool (31) comprises a spigot (32) that engages through the groove (22) in the locking strip of the end front plate (26) of the end strip (20) and presses against the cam (10) in order to urge the cam (10) out of the groove (22) and in order to release the blocking of the transverse displacement between the closure module and the end strip (20).

2. Locking system according to Claim 1, **characterized in that** the hooking arrangement is locked by means of a spring-biased slider (14) of the closure module.

3. Locking system according to Claim 1, **characterized in that** lateral arms (19) of the closure module (12) engage in pockets (25) of the end strip (20).

## Revendications

1. Système de verrouillage d'une station formant porte (1) d'un système de communication domestique,
• la station comportant une plaque avant divisée en une plaque avant principale (4) et une plaque avant d'extrémité (26) et une fente (5) étant ménagée entre la plaque avant principale (4) et la plaque avant d'extrémité (26),
• la plaque avant principale (4) étant reliée de manière fixe à un insert d'appareil (3) et un module de fermeture (12),
• la plaque avant d'extrémité (26) étant reliée de manière fixe à une baguette d'extrémité (20) comportant un élément de fermeture (21),
**caractérisé en ce que**
• il est prévu pour la fixation amovible de la baguette d'extrémité (20) à la station (1), un moyen d'accrochage arrière au niveau duquel des crochets d'encliquetage (23) de l'élément de fermeture (21) de la baguette d'extrémité (20) s'engagent par le biais de bords d'encliquetage de biseaux d'insertion (18) du module de fermeture (12)
• la baguette d'extrémité (20) comporte une baguette de verrouillage, une came (10) reliée au module de fermeture (12) s'engageant dans une gorge (22) d'une baguette de verrouillage sur le côté avant de la plaque avant d'extrémité (26) qui est dirigé vers la plaque avant principale (4) pour bloquer le coulissement latéral de la baguette d'extrémité (20) par rapport au module de fermeture (12), et
• pour démonter la baguette d'extrémité (20) de la station (1), un outil de démontage (31) s'engage dans la fente (5), l'outil de démontage (31) comportant une goupille (32) qui s'engage à travers la gorge (22) ménagée dans la baguette de verrouillage de la plaque frontale d'extrémité (26) de la baguette d'extrémité (20) et qui vient presser contre la came (10) pour chasser la came (10) de la gorge (22) et libérer le blocage du coulissement transversal entre le module de fermeture et la baguette d'extrémité (20).

2. Système de verrouillage selon la revendication 1, **caractérisé en ce que** le moyen d'accrochage arrière est verrouillé au moyen d'un tiroir à ressort (14) du module de fermeture.

3. Système de verrouillage selon la revendication 1, **caractérisé en ce que** des bras latéraux (19) du module de fermeture (12) s'engagent dans des poches (25) de la baguette d'extrémité (20).
